# FASCICULE DE BREVET EUROPEEN

(11) **EP 0 655 418 B1**
(45) Date de publication et mention de la délivrance du brevet: **07.04.1999**
(21) Numéro de dépôt: 94460046.9
(22) Date de dépôt: 28.11.1994
(51) Int. Cl.: C02F 1/44, C02F 9/00, C02F 1/78

(54) **Installation de potabilisation de l'eau à membranes filtrantes immergées**
Unterwassermembranfilteranlage zur Trinkwasserbereitung
Submerged membrane filter plant for producing drinking water

(30) Priorité: 30.11.1993 FR 9314570
(43) Date de publication de la demande: 31.05.1995
(73) Titulaire: OTV Omnium de Traitements et de Valorisation, 94417 St Maurice Cédex (FR)
(72) Inventeur: Cote, Pierre, F-78600 Maisons-Laffitte (FR); Faivre, Michel, F-78260 Acheres (FR); Moulin, Catherine, F-75011 Paris (FR); Desbos, Gilbert, F-78600 Maisons-Laffitte (FR)
(74) Mandataire: Vidon, Patrice

(56) Documents cités:
- EP-A- 0 433 200
- EP-A- 0 561 458
- FR-A- 2 306 942
- PATENT ABSTRACTS OF JAPAN vol. 12, no. 84 (C-482) 17 Mars 1988 & JP-A-62 221 493 (NAKAMURA TADASHI) 29 Septembre 1987
- PATENT ABSTRACTS OF JAPAN vol. 13, no. 224 (C-599) 24 Mai 1989 & JP-A-01 037 277 (MASUDA HITOSHI) 7 Février 1989
- PATENT ABSTRACTS OF JAPAN vol. 12, no. 50 (C-476) 16 Février 1988 & JP-A-62 197 198 (HIKAMI KATSUICHI) 31 Août 1987

## Description

Le domaine de l'invention est celui des installations de filtration et d'épuration pour le traitement des eaux.

L'invention s'applique plus particulièrement, mais non exclusivement, à la potabilisation des eaux, telles que, notamment, les eaux souterraines, profondes ou karstiques ou les eaux de surface.

D'une façon classique, les installations de traitement des eaux en vue de leur potabilisation comportent généralement une succession d'unités de traitement physico-chimiques du type floculation/décantation/filtration, complétées par une unité d'oxydation.

La floculation est une étape physico-chimique qui a pour but de modifier l'état des particules colloïdales contenues dans l'eau en y ajoutant un coagulant (polychlorure d'aluminium, sulfate d'alumine, chlorure ferrique...) afin de pouvoir les éliminer par décantation.

Les micro-organismes, les micro-polluants, les composés (fer ferreux, manganèse...) qui ne peuvent être éliminés par floculation, sont quant à eux détruits grâce à l'emploi d'oxydants puissants tels que l'ozone, le chlore, ou encore le bioxyde de chlore.

L'élimination des micropolluants peut également être effectuée par stripping (aération forcée) s'ils sont volatils ou par adsorption sur charbon actif. Ces derniers procédés présentent toutefois l'inconvénient de ne pas détruire la pollution, contrairement aux oxydants. C'est la raison pour laquelle l'ozone est fréquemment utilisé pour la potabilisation de l'eau de consommation, seul ou en combinaison avec le peroxyde d'hydrogène ou un rayonnement UV.

Une installation classique de traitement de l'eau en vue de sa potabilisation pourra ainsi être constituée d'une unité de floculation, suivie d'une unité de décantation, d'une unité de filtration (par exemple sur sable), d'une unité d'ozonation, d'une unité de filtration sur charbon actif en grains ou en poudre, et enfin d'une désinfection.

Les unités de filtration classiquement utilisées dans le cadre de telles installations de potabilisation peuvent avantageusement présenter deux couches de matériaux filtrants et notamment une première couche de charbon en grains disposée au-dessus d'une seconde couche de sable. L'utilisation de telles couches superposées de matériaux filtrants permet d'obtenir une rétention efficace des particules contenues dans l'eau à traiter à condition de procéder au lavage régulier des lits de matériaux granulaires.

Ce lavage des lits granulaires est classiquement effectué par rétrolavage en prévoyant dans l'unité de filtration un double fond délimité par une paroi munie de crépines permettant d'envoyer un liquide de lavage (par exemple le filtrat) au sein des matériaux granulaires formant les lits, afin de débarrasser ceux-ci des particules qui y ont été retenues.

En alternative aux traitements classiques de potabilisation des eaux, il a été récemment proposé une méthode de filtration sur membrane(s). On connaît ainsi, par le brevet français FR 2 655 642 une installation de traitement des eaux comprenant une boucle de circulation des eaux à traiter incluant au moins une membrane de filtration tangentielle, avec injection d'ozone dans la boucle de circulation.

Les installations de potabilisation de l'eau de l'état de la technique présentent de nombreux inconvénients.

En premier lieu, étant constitués d'une pluralité d'unités dédiées chacune à un traitement spécifique, elles présentent un dimensionnement important pouvant se révéler gênant pour leur implantation. Ce problème est particulièrement accru lors de la réalisation d'installations de potabilisation en milieu urbain, c'est-à-dire là ou la surface est rare et donc souvent chère.

De plus, de telles installations nécessitent la réalisation de nombreux raccords entre les différentes unités de traitement, raccords qui sont souvent longs à installer, coûteux et qui représentent autant de points de faiblesse de l'installation.

On notera également que l'emploi de réactifs chimiques au cours de l'étape de floculation conduit à la formation de quantités de boues importantes et à la nécessité de traiter les boues formées par la coagulation des matières organiques contenues dans les eaux traitées.

L'objectif de la présente invention est de résoudre ces différents problèmes et notamment de proposer une installation de traitement de l'eau en vue de sa potabilisation présentant des dimensions sensiblement inférieures à celles des installations connues de l'état de la technique.

Notamment, un des objectifs de l'invention est de proposer une installation intégrant dans un seul et même cuvelage au moins certains des traitements suivants : flottation, décantation, filtration, oxydation.

Encore un autre objectif de l'invention est de décrire une installation pouvant être intégrée dans les cuvelages existants.

Encore un autre objectif de l'invention est de fournir un nombre de raccord inférieur au nombre de raccords classiquement nécessaires dans les installations de potabilisation de l'état de la technique.

Un autre objectif de l'invention est également d'inclure dans une installation de traitement de l'eau une ou plusieurs membranes de filtration, en remplacement des unités de filtration sur lit(s) granulaire(s), tout en permettant le maintien de courant élevés de traitement.

Un autre objectif de la présente invention est également de proposer une installation de traitement de potabilisation de l'eau présentant une grande souplesse d'utilisation, notamment lors de la mise en oeuvre de l'étape de rétrolavage de la ou des membranes.

Enfin, un autre objectif de l'invention est de proposer une installation de traitement de l'eau pouvant mettre en oeuvre de nombreuses variantes de procédé de filtration ou de rétrolavage, et pouvant être réalisée selon de nombreuses variantes de construction.

Ces différents objectifs, ainsi que d'autres qui apparaîtront par la suite sont atteints grâce à l'invention qui concerne une installation de traitement de l'eau, notamment en vue de sa potabilisation, caractérisée en ce qu'elle inclut :
- un réacteur délimitant au moins une chambre de traitement comprenant des moyens d'amenée de l'eau à traiter à l'intérieur de ladite chambre, des moyens de purge des polluants flottés et des moyens de purge des polluants décantés ;
- une pluralité de membranes de filtration prévues à l'intérieur de ladite chambre et destinées à être immergées dans l'eau à traiter ;
- des moyens de délimitation d'une zone de filtration autour de chacune desdites membranes ;
- des moyens d'entraînement et de circulation permettant de guider le courant d'eau à traiter dans ladite zone de filtration selon une direction privilégiée, lesdits moyens d'entraînement et de circulation incluant des moyens d'injection d'ozone ;
- des moyens de récupération du perméat à la sortie desdites membranes de filtration.

Selon l'invention, il est ainsi créé un "fluid-lift" permettant d'entraîner l'eau à traiter dans la direction privilégiée de filtration.

L'ozone pourra ainsi être produit à partir d'air ou d'oxygène. L'ozone présente en effet l'avantage d'être un oxydant puissant de la matière organique autorisant des réactions radicalaires impliquant entre autres le radical OH°. Comme il sera expliqué plus en détails ci-après, il pourra d'ailleurs être intéressant dans certains cas d'utiliser l'installation selon l'invention de façon à allonger le temps de contact entre l'eau à traiter et l'ozone.

L'ozone utilisé au sein de l'installation permet de jouer aussi plusieurs rôles complémentaires :
- action bactéricide et virulicide sur l'eau à traiter et donc aseptisation de celle-ci,
- amélioration de ses qualités organoleptiques (goût, couleur, odeur),
- oxydation des micro-polluants,
- oxydation des métaux en solution, tels que le fer et le manganèse.

Lorsque de l'ozone est ainsi utilisé pour servir à la fois de fluide de circulation et de fluide oxydant, l'installation selon l'invention permet d'intégrer dans un seul et même réacteur les fonctions de flottation, de décantation, de filtration et d'oxydation qui étaient jusqu'alors dévolues à des unités de traitement distinctes.

Avantageusement, ladite direction privilégiée est un écoulement du courant d'eau tangentiel auxdites membranes.

L'utilisation de moyens permettant une direction de filtration privilégiée conduit à l'obtention d'un réacteur dans lequel se produisent :
- la filtration de l'eau sur membranes,
- la flottation des particules moins denses que l'eau retenues par les membranes et,
- la décantation des particules plus denses que l'eau retenues par les membranes.

L'installation selon l'invention présente donc un concept qui permet de supprimer les unités de prétraitement de floculation et de décantation habituellement prévues en amont des unités de filtration, lorsque ces dernières sont classiquement constituées par des filtres à lit(s) granulaire(s), en intégrant les fonctions remplies par ces différentes unités dans un seul et même réacteur.

On comprendra qu'une telle intégration offre de multiples avantages, au rang desquels on peut citer :
- la suppression d'un nombre important de raccords, jusqu'ici utilisés pour relier les unités entre elles ;
- le gain de place induit par la réalisation d'un réacteur dans lequel le prétraitement a lieu.

Bien qu'il soit possible d'envisager la réalisation des moyens de délimitation des zones de filtration sous d'autres formes, ceux-ci sont préférentiellement constituées par des enveloppes entourant chacune une membrane, lesdites enveloppes présentant des orifices permettant le passage de l'eau à traiter selon ladite direction de traitement privilégiée. De telles enveloppes permettent de délimiter précisément la zone de filtration autour de chaque membrane, les orifices permettant quant à eux d'établir un circuit précis du parcours emprunté par l'eau, afin que celle-ci puisse subir une filtration très efficace aux niveaux desdites membranes.

Préférentiellement, lesdites membranes et lesdits moyens de délimitation d'une zone de filtration autour de chacune desdites membranes présentent une position verticale à l'intérieur de ladite chambre de traitement. On pourra toutefois envisager, dans certains modes de réalisation de prévoir des membranes et des enveloppes les entourant disposées selon une position horizontale ou inclinée. Toutefois, le positionnement vertical est préféré dans la mesure ou il favorise l'écoulement de l'eau à traiter.

Egalement préférentiellement, ledit réacteur est muni d'une paroi à laquelle lesdites membranes sont solidarisées, ladite paroi formant une double chambre constituée par une première chambre formée par ladite chambre de traitement et une seconde chambre formant une zone de récupération du perméat.

Avantageusement, cette paroi forme un double-fond dudit réacteur. On notera toutefois qu'une telle paroi pourra éventuellement former, dans d'autres modes de réalisation, non pas un double-fond mais une paroi délimitant une chambre latérale de récupération du perméat.

Selon une variante de réalisation de l'invention, lesdits moyens d'injection d'ozone peuvent être constitués par des moyens de formation de bulles d'ozone. Ainsi, à l'action chimique de l'ozone, s'ajoute l'action mécanique des bulles qui sont avantageusement utilisées pour décolmater les membranes.

Selon une autre variante, lesdits moyens d'injection d'ozone incluent des moyens de dissolution de l'ozone dans l'eau.

Comme il sera explicité plus en détail ci-après, ces derniers moyens pourront notamment être constitués par un hydroinjecteur, installé en aval d'une pompe de recirculation de l'eau à traiter dans l'installation ou par un dispositif de dissolution sous pression de l'ozone dans l'eau, également installé en aval d'une pompe de recirculation.

L'ozone pourra donc être introduit au sein de l'installation selon les trois modes de mise en oeuvre suivants :
- sous une forme monophasique gazeuse : grâce à l'utilisation de moyens de formation de bulles d'ozone distribuées à proximité de membranes ;
- sous une forme biphasique : grâce à l'utilisation de moyens de dissolution de l'ozone dans une partie de l'eau à traiter et recirculée ;
- sous une forme monophasique aqueuse grâce à l'utilisation de moyens de dissolution sous pression de l'ozone dans une partie de l'eau à traiter et recirculée.

Préférentiellement, l'installation comprend des moyens de récupération de l'ozone résiduel. Cet ozone pourra être avantageusement réinjecté dans l'installation ou encore être détruit.

En ce qui concerne les membranes utilisées dans le cadre de l'installation selon l'invention, celles-ci pourront être des membranes planes ou encore des membranes tubulaires organiques ou minérales. Toutefois, dans un mode de réalisation préférentiel, lesdites membranes sont chacune constituées d'un ensemble formé par une pluralité de fibres creuses, utilisées en mode de filtration externe/interne. Ces membranes organiques résistantes à l'ozone sont avantageusement choisies dans la famille des polymères fluorés tels que le PVDF ou le PTFE.

De telles membranes présentent en effet l'avantage d'offrir une surface filtrante supérieure, pour un volume d'occupation donné, aux surfaces des membranes précédemment citées.

Enfin, en plus de leur caractère compact, elles présentent un faible coût qui les rend tout à fait intéressantes dans le cadre de la réalisation d'une installation selon l'invention.

Préférentiellement, lesdites fibres creuses sont bouchées à l'une de leurs extrémités, l'autre extrémité communiquant avec lesdits moyens de récupération du perméat.

Egalement préférentiellement, lesdits moyens d'injection d'ozone comprennent au moins un tuyau traversant lesdites membranes selon leur axe longitudinal, parallèlement auxdites fibres creuses, lesdits tuyaux permettant d'amener l'ozone d'un réseau d'alimentation prévu au-dessus desdites membranes jusqu'au pied desdites membranes.

Selon une autre variante de l'invention, lesdits moyens d'injection d'ozone comprennent des poreux, préférentiellement installés au pied desdites membranes. Dans un tel mode de réalisation, l'ozone est donc fourni directement au pied des membranes et non plus amené par des tuyaux du haut de ces membranes jusqu'à leur pied. Une telle construction permet d'employer des poreux classiques et présente de surcroît l'avantage d'éliminer tout circuit de distribution d'ozone au niveau de l'extrémité supérieure des ensembles de filtration et ainsi de simplifier la réalisation de ceux-ci.

Selon une variante de l'invention, lesdites enveloppes délimitant les zones de filtration présentent des orifices inférieurs par lesquels l'eau pénètre et des orifices supérieurs par lesquels l'eau et le fluide d'entraînement s'échappent, l'eau présentant un mouvement ascendant tangentiel auxdites membranes. On notera toutefois qu'il pourra être envisagé de pourvoir les enveloppes d'orifices situés en d'autres endroits, sans sortir du cadre de l'invention.

Selon une variante de l'invention, lesdits moyens de récupération du perméat comprennent au moins une pompe aspirante. Une telle pompe peut être utilisée pour placer la zone de récupération du perméat en dépression par rapport à la chambre de traitement, et ainsi de provoquer le passage de l'eau à travers les membranes de filtration. Toutefois, l'installation pourra également être pourvue de moyens de mise sous pression de la chambre de traitement, forçant l'eau à travers les filtres de façon à l'évacuer vers la zone de récupération du perméat, celle-ci étant alors maintenue à la pression atmosphérique. On notera que l'évacuation du perméat pourra aussi s'effectuer gravitairement, notamment à l'aide d'un siphon.

Préférentiellement, ladite paroi séparant la chambre de traitement de la chambre de récupération du perméat est munie de moyens d'injection dans lesdites membranes d'un fluide de lavage des membranes. De tels moyens peuvent par exemple être constitués de tubes traversant ladite paroi et abouchant dans la zone perméat des membranes. De tels tubes sont utilisés pour envoyer le liquide de lavage dans la chambre de traitement afin de débarrasser les membranes des particules qui s'y sont fixé, ce fluide de lavage pouvant être de l'eau, et notamment le perméat ou un autre fluide, tel que de l'air.

Egalement préférentiellement, l'installation comprend une pompe de rétrolavage permettant d'effectuer des lavages desdites membranes en courant inverse, à l'aide du perméat.

Selon une variante de réalisation de l'invention, l'installation comprend également un compresseur d'air permettant d'injecter de l'air sous pression dans ladite chambre de récupération du perméat qui pourra servir à :
- tester l'intégrité des membranes,
- repousser le perméat dans les membranes au moment d'un rétro-lavage,
- augmenter le débit d'air dans le circuit d'injection d'ozone ou dans un circuit séparé pour améliorer l'efficacité des lavages et de la flottation,
- chasser les flottants à la surface du réacteur.

On notera que pour ces deux dernières fonctions, l'ozone est injecté dans la chambre de traitement.

Pour tester l'intégrité des membranes, de l'air comprimé est envoyé à l'intérieur de membranes. Une perte de charge importante ou l'apparition de bulles à la surface de la chambre de traitement signifie une rupture dans la structure de la membrane. Il est donc ainsi possible de vérifier périodiquement et simplement l'état des membranes.

Lors d'une opération de rétrolavage, l'air comprimé peut aussi être utilisé pour aider à repousser le perméat à travers les membranes.

Egalement avantageusement, l'installation selon l'invention possède des moyens de recirculation d'une partie de l'eau présente dans ladite chambre de traitement couplée à des moyens d'alimentation en ozone. De tels moyens de recirculation permettent d'ozoner une partie de l'eau à traiter afin de l'utiliser comme fluide de guidage.

Avantageusement ces moyens de recirculation comprennent au moins une boucle de recirculation.

Selon une variante de l'invention, l'installation peut ainsi comprendre au moins un hydroinjecteur prévu sur ladite boucle de recirculation, ledit hydroinjecteur permettant de disperser l'ozone fourni par les moyens d'alimentation en ozone dans l'eau transitant par ladite boucle de recirculation. Un tel hydroinjecteur permet d'injecter l'ozone sous une forme biphasique dans lesdites zones de filtration.

Selon une autre variante, l'installation peut comprendre au moins un saturateur prévu sur ladite boucle de recirculation, ledit saturateur permettant de dissoudre sous pression élevée l'ozone fourni par les moyens d'alimentation en ozone dans l'eau transitant par ladite boucle de recirculation. Un tel saturateur permet d'injecter l'ozone sous un forme monophasique aqueuse dans lesdites zones de filtration.

Selon une variante, l'installation comprend de plus des unités permettant d'affiner le traitement de l'eau, lesdites unités étant prévues à la sortie dudit réacteur et permettant notamment d'éliminer la charge en carbone organique dissous biodégradable formé par l'ozonation de l'eau à traiter ainsi que les sous-produits résultant de cette ozonation, tels que les bromates.

De telles unités sont avantageusement choisies dans le groupe constitué par les barrières de sécurité incluant une ou plusieurs membranes de nanofiltration et/ou d'osmose inverse.

Selon une variante de réalisation de l'invention l'installation n'inclut pas d'enveloppe délimitant les zones de filtration , celles-ci étant alors uniquement délimitées par la force du fluide de guidage de l'eau à traiter.

L'invention concerne également un ensemble de filtration pour le traitement de l'eau, notamment en vue de sa potabilisation, caractérisé en ce qu'il comprend :
- une chambre de traitement comprenant des moyens d'amenée de l'eau à traiter à l'intérieur de ladite chambre, des moyens de purge des polluants flottés et des moyens de purge des polluants décantés ;
- une membrane de filtration entourée par une enveloppe délimitant une zone de filtration, ladite membrane étant installée à l'intérieur de ladite chambre de traitement,
- une paroi à laquelle est fixée ladite membrane ménageant un double-fond dans ladite chambre de traitement et délimitant une zone de récupération du perméat ;
- des moyens d'injection d'ozone permettant de créer un courant d'eau à l'intérieur de ladite enveloppe.

L'invention concerne également un procédé de traitement de l'eau notamment en vue de sa potabilisation, caractérisé en ce qu'il comprend les étapes consistant :
- à filtrer l'eau à travers une pluralité de membranes immergées dans l'eau à traiter;
- à ménager autour de chacune de ces membranes une zone de filtration;
- entraîner un courant d'eau dans la zone de filtration, selon une direction privilégiée grâce à des moyens d'entraînement et de circulation incluant des moyens d'injection d'ozone ;
- à récupérer le perméat à la sortie desdites membranes.

L'ozone pourra être utilisé seul ou avec un autre composé oxydant tel que, notamment, le peroxyde d'hydrogène.

Selon une variante avantageuse de l'invention, le procédé comprend une étape consistant à éliminer au moins une partie des matières polluantes dissoutes dans l'eau à traiter, telles que notamment les pesticides, par addition dans ladite chambre de traitement d'au moins un réactif coagulant, adsorbant ou oxydant. Un tel réactif pourra notamment être constitué par du charbon actif en poudre.

Enfin, l'invention concerne diverses utilisations de l'installation précédemment décrite. L'invention concerne ainsi une utilisation caractérisée en ce qu'elle consiste à alimenter ladite chambre de traitement uniformément en surface avec l'eau à traiter et à placer la chambre de récupération du perméat des membranes en dépression. Une telle utilisation autorise une consommation d'énergie réduite.

L'invention concerne aussi une utilisation caractérisée en ce qu'elle consiste à effectuer un recyclage interne de l'eau à traiter à l'intérieur de ladite chambre de traitement de façon à rallonger le temps de contact de l'eau à traiter avec l'ozone. Une telle utilisation peut s'avérer nécessaire notamment pour accroître le taux d'élimination des micro-polluants.

L'invention concerne aussi une utilisation caractérisée en ce qu'elle comprend la mise en oeuvre de rétrolavages des membranes par injection en courant inverse de perméat dans la chambre de traitement de l'installation, la périodicité des rétrolavages variant en fonction de la charge de matières en suspension de l'eau arrivant dans l'installation et de l'efficacité de la flottation.

L'invention concerne aussi l'utilisation consistant à mettre en oeuvre des rétrolavages des membranes par injection en courant inverse d'un mélange monophasique aqueux d'eau et d'ozone.

L'invention concerne aussi une utilisation consistant à mettre en oeuvre des rétrolavages par injection d'air comprimé dans la chambre de récupération du perméat pour déplacer l'eau dans les membranes.

Enfin, l'invention se rapporte à une utilisation consistant à injecter de l'air comprimé dans ladite chambre de récupération du perméat afin de vérifier l'intégrité des membranes.

On notera que dans son mode de réalisation préférentielle, dans lequel le fluide d'entraînement est de l'ozone, l'invention constitue en quelque sorte un perfectionnement à la technique revendiquée dans le brevet français FR-A-2 655 642 (EP-A-0 433 200). Ce document décrit en effet une installation pour la filtration et l'épuration de liquides tels que l'eau, comprenant une boucle de filtration avec pompe de recirculation et au moins un membrane de filtration tangentielle que traverse une partie du liquide à traiter et comprenant par ailleurs des moyens d'adjonction d'ozone à l'eau à traiter, dans la boucle en amont de la membrane, de façon à former des microbulles d'ozone d'une taille telles qu'elles créent des turbulences dans le liquide au droit de la membrane. Ces turbulences, couplées au phénomène d'oxydation, limitent le colmatage de la membrane et conduisent à l'amélioration du débit et des qualités physico-chimiques du perméat. Dans le mode de réalisation préférentiel de la présente invention, une telle boucle de recirculation est formée par la création d'un courant d'eau, se déplaçant sous l'action de l'ozone dans une direction privilégiée favorisant la filtration, ledit courant entrant par les orifices inférieurs des enveloppes délimitant les zones de filtration et en sortant par les orifices supérieurs.

L'invention concerne aussi une utilisation de l'installation décrite comprenant une étape consistant à régénérer lesdites membranes par lavage à l'ozone. Lors d'une telle utilisation, l'alimentation en eau est arrêtée. Par injection d'ozone et d'eau recirculée, la perméabilité des membranes peut être rétablie.

Enfin, l'invention concerne aussi une utilisation de l'installation consistant à régénérer lesdites membranes par lavage à l'aide d'une solution de nettoyage renfermant au moins un produit chimique, ladite chambre de traitement de l'installation servant alors de cuve de mélange et de recyclage de ladite solution de nettoyage. Les produits chimiques utilisés peuvent ainsi notamment être constitués par de la soude, un acide ou encore un détergent.

L'invention, ainsi que les différents avantages qu'elle présente, seront plus facilement compris grâce à la description qui va suivre de plusieurs modes de réalisation de celle-ci, en référence aux dessins dans lesquels :
- la figure 1 représente une vue schématique d'une installation selon l'invention fonctionnant avec de l'ozone sous forme monophasique gazeuse ;
- la figure 2 représente une vue de haut schématique du réacteur utilisé pour l'installation représentée à la figure 1;
- la figure 3 représente une vue de côté de ce réacteur, dans une coupe selon l'axe xx de la figure 2 ;
- la figure 4 représente une autre vue de côté de ce réacteur, dans une coupe selon l'axe yy de la figure 2 ;
- la figure 5 montre un module de filtration utilisé dans le cadre de la réalisation de l'installation représentée à la figure 1 ;
- les figure 6, 6a, 6b montrent plus précisément le module de filtration représenté à la figure 5 et une de ses variantes ;
- la figure 7 représente une vue schématique d'une autre installation selon l'invention fonctionnant avec de l'ozone sous forme biphasique ;
- la figure 8 représente une vue schématique d'encore une autre installation selon l'invention fonctionnant avec de l'ozone sous forme monophasique aqueuse ;
- les figures 9, 9a, 9b, 9c montrent un deuxième type de module mettant en oeuvre un autre mode de filtration et ses variantes;
- la figure 10 montre un troisième type de module mettant en oeuvre encore un autre mode de filtration et une variante,
- la figure 11 représente une installation selon l'invention ayant servi à la réalisation d'essai,
- la figure 12 représente l'évolution de la perméabilité des membranes de l'installation montrée à la figure 11 lors de la filtration d'eau de Seine.

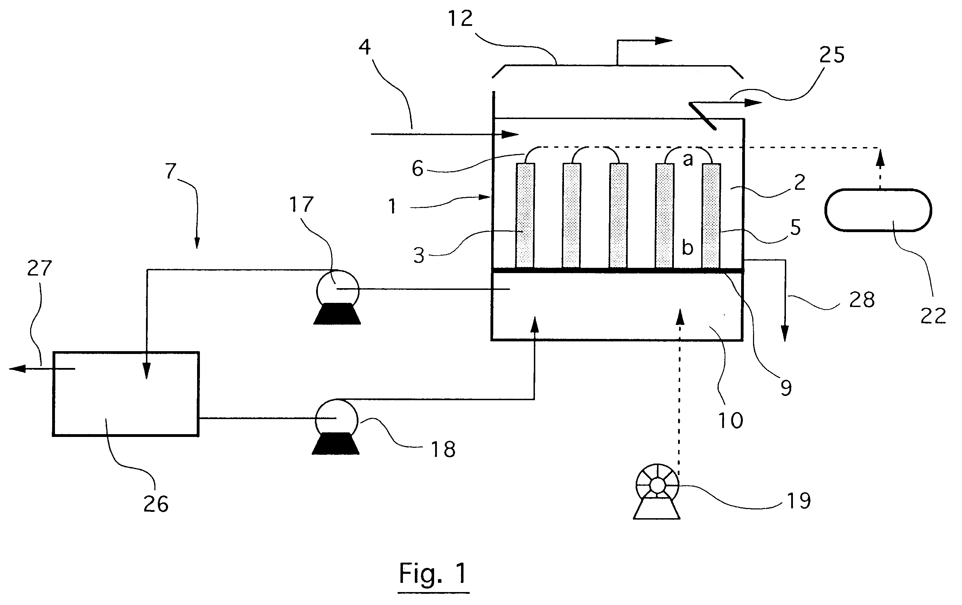

En référence à la figure 1, une installation de traitement de l'eau en vue de sa potabilisation comprend un réacteur 1 muni d'une paroi 9 délimitant un double fond à l'intérieur du réacteur 1 et divisant celui-ci en une chambre supérieure de traitement de l'eau 2 et une chambre inférieure 10. Cette paroi 9 supporte une pluralité de modules de filtration 3 constitués chacun par plusieurs fibres creuses logées dans une enveloppe 5. Chacun de ces modules présente une hauteur de 125 cm et un diamètre de 12 cm pour une surface filtrante de 10 m². Ces modules contiennent chacun 1600 fibres creuses d'un diamètre interne de 1,1 mm et d'un diamètre hors-tout de 2 mm.

La zone perméat de ces membranes formée par l'intérieur des fibres creuses communique avec la chambre inférieure 10 qui forme une chambre de récupération du perméat.

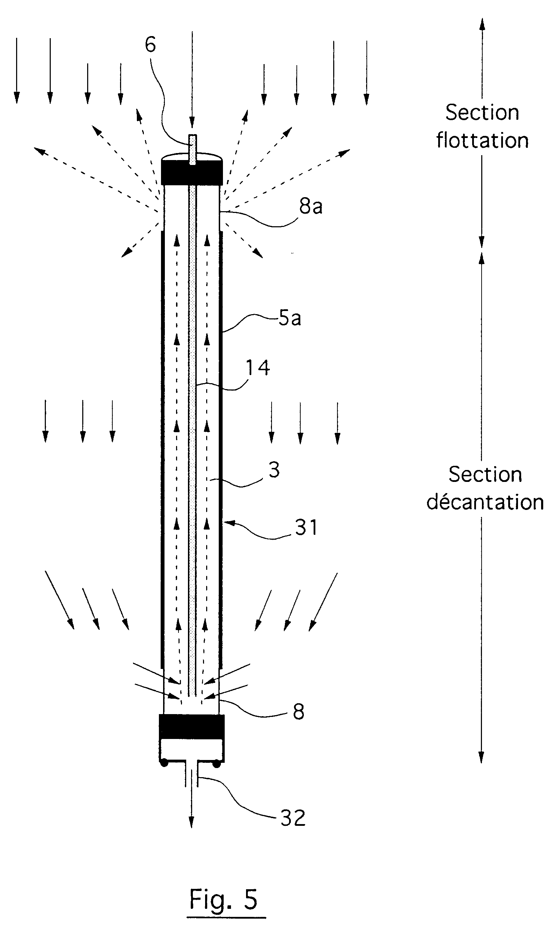

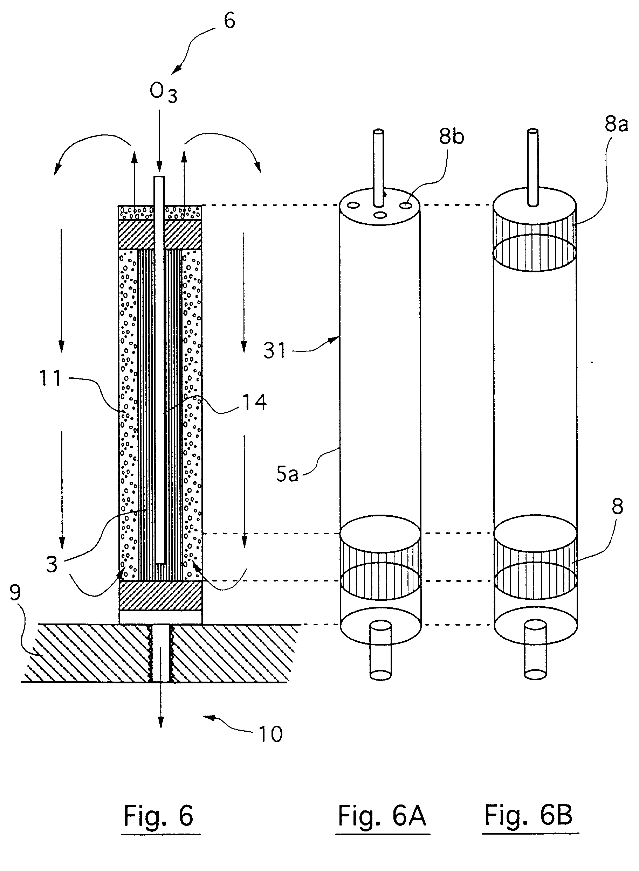

Les modules de filtration dont la conception sera décrite plus en détail en référence à la figure 5 et à la figure 6 sont connectés à des moyens d'injection d'ozone 6 au niveau de leurs extrémités supérieures. Ces moyens d'injection d'ozone 6 sont eux-mêmes reliés à des moyens d'alimentation en ozone 22.

Le réacteur 1 présente dans sa partie supérieure des moyens d'amenée 4 de l'eau brute à traiter dans la partie supérieure de ce réacteur ainsi que des moyens d'évacuation du rétentat de filtration, décanté 28 ou flotté 25.

Par ailleurs, une hotte 12 installée au-dessus du réacteur 1 permet de récupérer et de détruire l'ozone résiduel provenant de ce réacteur.

La paroi 9 sur laquelle sont fixés les modules de filtration, délimite donc une zone eau brute 2 dans la chambre de traitement et une zone perméat dans la chambre de récupération du perméat 10. Cette zone perméat communique avec les modules de filtration au niveau de la partie inférieure des membranes 3.

La zone de récupération du perméat 10 communique, quant à elle, avec des moyens de récupération du perméat 7 incluant une pompe aspirante 17 permettant de placer la chambre 10 en dépression par rapport à la chambre de traitement 2 et un réservoir de stockage du perméat 26 pourvu d'une évacuation 27. Ce réservoir 26 communique par ailleurs avec une pompe de rétrolavage 18 permettant de réinjecter le perméat qui est stocké dans la chambre de traitement 2. Enfin, la chambre 10 est également en communication avec un compresseur 19.

Lors du fonctionnement de l'installation selon l'invention, l'eau brute est amenée dans la chambre de traitement 2 du réacteur 1 par la canalisation 4 de façon à submerger les modules de filtration 31 constitués par des membranes 3 dans leur enveloppe respective 5. Ces enveloppes 5 délimitent autour de chaque membrane des zones de filtration à l'intérieur desquelles l'eau brute est guidée grâce à l'injection d'ozone par les moyens d'injection 6.

Comme il sera expliqué plus en détail en référence aux figures 5 et 6, ces moyens d'injection d'ozone permettent d'amener des bulles d'ozone au niveau du pied des membranes 3 et ainsi de créer un courant dans une direction ascendante de filtration privilégiée à l'intérieur des enveloppes 5.

Grâce à l'apparition d'un tel courant, la zone eau brute présente à l'intérieur de la chambre de traitement 2 se trouve divisée en 2 sections : une première section (a) dans laquelle a lieu la flottation des particules contenues dans l'eau brute plus denses que celle-ci et retenues par les membranes et une seconde section (b) dans la partie inférieure de la chambre 2 dans laquelle se produit la décantation des particules plus denses que l'eau brute et retenues par les membranes de filtration.

Afin d'autoriser la filtration de l'eau brute à l'intérieur des membranes 3, la chambre de récupération du perméat 10 est mise sous pression négative grâce à la pompe aspirante 17. Pratiquement, cette pression varie de - 0,2 à - 0,8 bar. On notera que l'on pourra utiliser à titre de pompe aspirante 17, notamment une pompe centrifuge de façon à obtenir une pression substantiellement constante ou encore une pompe à déplacement positif de façon à obtenir un débit constant du perméat.

On notera également que l'eau d'alimentation amenée par la canalisation 4 n'aura à subir qu'un dégrillage et un désablage en guise de pré-traitement. En effet, les fonctions intégrées de flottation et de décantation permettent d'enlever les matières en suspension qui pourraient nuire au fonctionnement des membranes. Ceci représente un avantage important par rapport aux modules de fibres creuses classiques dont l'eau d'alimentation doit être pré-filtrée à un seuil de coupure de 50 à 200 µm.

L'installation décrite permet donc d'intégrer la filtration sur membrane, la flottation et la décantation de l'eau ainsi que l'oxydation de celle-ci dans le même réacteur. L'ozone qui, dans ce cas, est injecté sous forme monophasique gazeuse permet en effet d'oxyder efficacement la matière organique contenue dans l'eau à traiter tout en stérilisant celle-ci et en améliorant ses qualités organoleptiques.

Périodiquement la pompe de rétrolavage 18 peut être mise en oeuvre pour effectuer des lavages en courant inverses des membranes à l'aide du perméat stocké dans le réservoir 26. Ces étapes de rétrolavage peuvent être accompagnées d'un fort débit d'air introduit par le circuit d'injection d'ozone afin d'agiter les membranes pour décoller et évacuer les matières en suspension. A ce titre, le compresseur 19 pourra fournir de l'air dans le circuit d'injection d'ozone.

Un autre mode de rétrolavage qui peut être employé consiste à utiliser l'air comprimé fourni par le compresseur 19. Pour mettre en oeuvre ce mode de lavage à courant inverse, il suffit d'allonger les embouts (à la base des modules) servant à fixer ceux-ci à la paroi 9. Ces embouts définissent alors un volume dans la partie supérieure de la chambre de récupération du perméat 10 où l'air s'accumule, chassant le perméat à travers les fibres creuses selon un courant inverse. Le rétrolavage commence donc par l'utilisation du perméat présent dans la chambre 10, dont le volume dépend de la capacité de cette chambre, et se termine par la pénétration de l'air dans les embouts. Cette méthode de rétrolavage permet d'éliminer le réservoir extérieur de perméat 26 ainsi que la pompe de rétrolavage 18. D'une façon tout à fait intéressante, cette pénétration d'air en fin de rétrolavage permet de tester l'intégrité des membranes.

Ces méthodes de rétrolavage présentent une grande souplesse par rapport aux systèmes membranaires classiques dont le volume des purges correspond au volume de la boucle de recyclage. Grâce à l'installation selon l'invention, les rétrolavages peuvent être effectués sans être accompagnés d'une purge, les matières solides étant concentrées et accumulées à la surface du réacteur.

L'intégrité des membranes peut facilement être vérifiée en arrêtant la filtration et l'injection d'ozone et en introduisant de l'air grâce au compresseur 19 dans la chambre de récupération du perméat 10 selon une pression statique plus faible que le point de bulle des membranes. Lors de cette opération, l'air déplace l'eau, présente dans les fibres creuses et remplit celle-ci. Une fuite ou une fibre brisée est détectée de suite en observant la production de bulles à la surface ou au fond du réacteur.

Le réacteur 1 comprend par ailleurs une purge 28. Cette purge de fond peut être utilisée pour vider complètement le réacteur périodiquement et, si nécessaire, nettoyer le fond par jets d'eau. Pour la purge de surface, un système de raclage ou des jets d'air comprimé (non représentés) peuvent être utilisés pour transporter les matières flottantes vers l'évacuation 25.

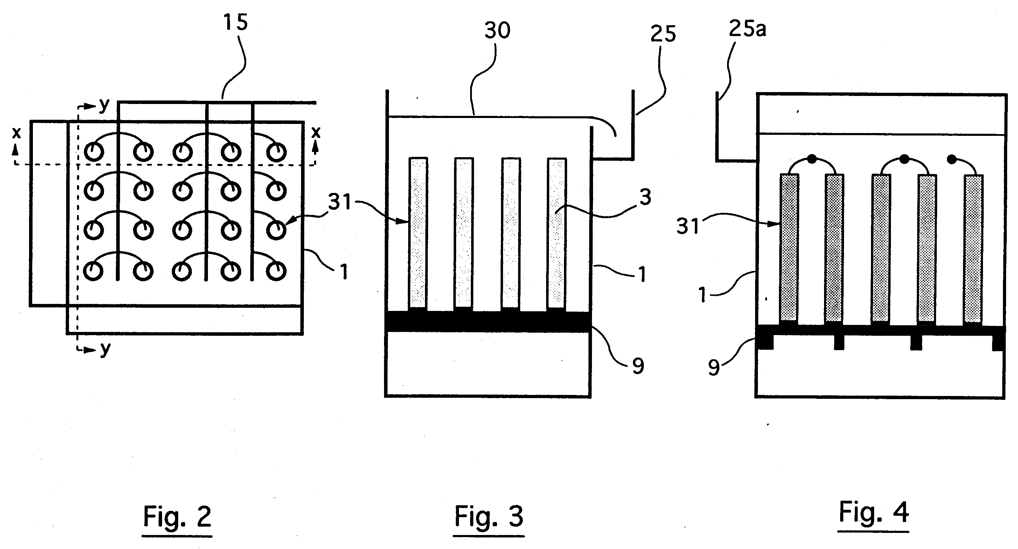

En référence à la figure 2, qui montre le réacteur 1 de l'installation représenté à la figure 1, les modules de filtration sont alimentés en ozone par un réseau 15 communiquant avec des moyens de production ou de stockage d'ozone. On notera que les modules de filtration renfermant les membranes étant relativement rapprochés les uns des autres, les longueurs de raccords utilisées pour connecter ces modules de filtration au réseau alimentation en ozone 15 sont relativement courtes. En tout état de cause, ils sont beaucoup plus faciles à mettre en oeuvre que les raccords qui étaient jusqu'ici nécessaires dans les installations de potabilisation de l'eau de l'état de la technique.

En référence à la figure 3, qui montre le réacteur 1 en coupe transversale selon l'axe yy montré à la figure 2, les modules de filtration 31 renfermant les membranes 3 sont submergés par l'eau à traiter jusqu'à un niveau 30 prévu pour permettre l'évacuation des matières flottantes par une évacuation constituée par une goulotte 25.

En référence à la figure 4, qui montre une coupe du réacteur 1 selon l'axe xx représenté à la figure 2, une deuxième goulotte 25a est prévue pour l'alimentation sur un autre côté du réacteur 1.

Un des modules de filtration 31 utilisé dans le cadre de la réalisation de l'installation représentée schématiquement à la figure 1 est montré plus en détails à la figure 5. Ce module de filtration 31 est constitué par une enveloppe 5a à l'intérieur de laquelle sont disposées des membranes 3 à fibres creuses (non représentées). Cette enveloppe 5a présente dans sa partie inférieure et dans sa partie supérieure des zones ajourées 8, 8a. Des moyens d'injection d'ozone 6 dans la membrane 3 incluant un tuyau d'approvisionnement 14 s'étendant le long de l'axe du module de filtration 31 permettent d'amener des bulles d'ozones au pied de la membrane de façon à ce que celles-ci inculquent un mouvement ascendant à l'eau pénétrant par la zone ajourée 8 de l'enveloppe 5a vers la zone ajourée supérieure 8a de celle-ci. Cet entraînement de l'eau grâce aux bulles d'ozone permet à l'eau d'être filtrée dans les membranes de fibres creuses disposées entre le tuyau d'approvisionnement d'ozone 14 et l'enveloppe extérieure 5a. Le perméat constitué par l'eau filtrée est récupéré au pied 32 du module. Le mouvement suivi par l'eau à traiter à proximité du module dans le réacteur 1 est symbolisé par les flèches pleines tandis que le mouvement des bulles d'ozone est représenté en flèches pointillées.

Les figures 6 et 6b montrent plus précisément le module de filtration représenté à la figure 5 et la figure 6a montre une variante de réalisation selon laquelle l'enveloppe 5a entourant la membrane 3 est pourvue dans sa partie inférieure d'une zone ajourée 8 et à son extrémité supérieure d'orifice 8b en remplacement de la zone ajourée supérieure. Les bulles d'ozone 11 sont introduites de la même façon par les moyens d'injection 6 incluant un tuyau d'approvisionnement 14 amenant l'ozone au pied du module de filtration 31. Ce module de filtration 31 est fixé à la paroi 9 du réacteur de façon à acheminer le perméat vers la chambre de récupération du filtrat 10.

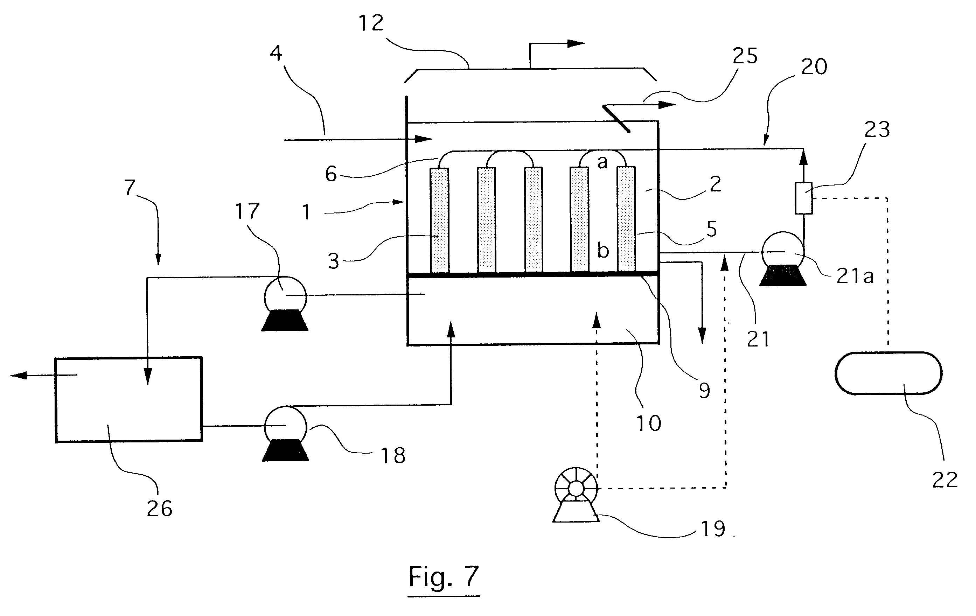

La figure 7 montre un autre mode de réalisation d'une installation selon l'invention, dans laquelle l'ozone n'est pas injectée sur des membranes sous forme monophasique gazeuse mais sous une forme biphasique. L'installation comprend des moyens de recirculation 20 d'une partie de l'eau présente dans la chambre de traitement 2, incluant une canalisation 21 branchée près du fond de chambre et communiquant avec les moyens de distribution d'ozone 6. Sur cette canalisation 21 sont prévus une pompe de recirculation 21a ainsi qu'un hydroinjecteur communiquant avec des moyens de production ou de stockage d'ozone 22. Cet hydroinjecteur 23 permet la réalisation avec l'eau circulant dans la canalisation 21, d'un mélange biphasique eau + ozone destiné à être injecté dans les membranes 3 afin de servir de fluide de guidage à l'eau transitant dans les modules de filtration. L'utilisation d'un tel mélange biphasique permet de mieux contrôler l'écoulement tangentiel de l'eau dans les modules de filtration 31.

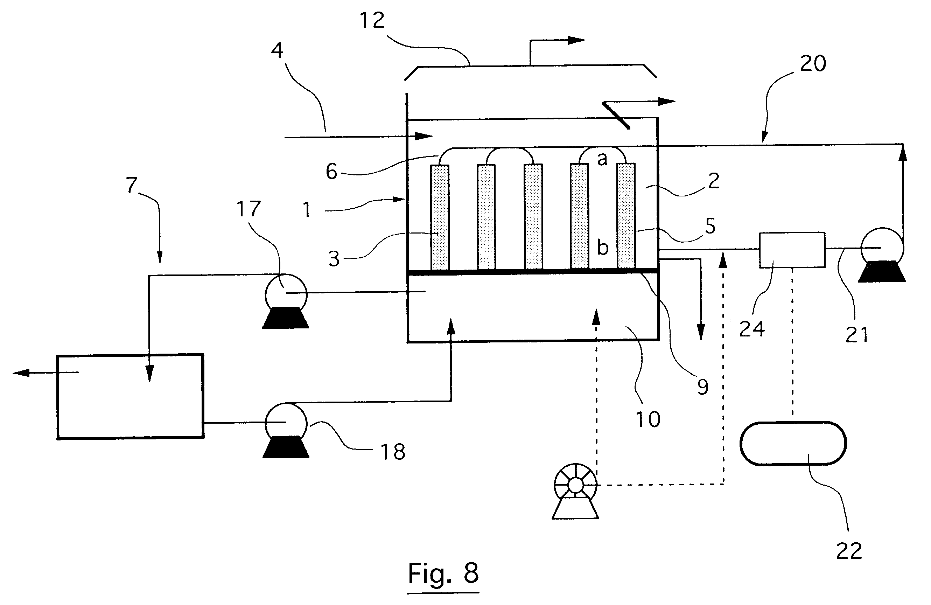

L'installation représentée à la figure 8 comprend des moyens de production d'un mélange monophasique d'ozone et d'eau afin d'utiliser celui-ci comme un fluide de guidage de l'eau à filtrer à l'intérieur des modules de filtration. Ces moyens comprennent des moyens de recirculation 20 incluant une boucle 21 reliant l'intérieur de la chambre 2 au moyen de distribution d'ozone 6. En amont d'une pompe 21a installée sur la boucle 21, un saturateur d'ozone 24 relié à des moyens de production ou de stockage 22 de l'ozone permet de dissoudre sous pression élevée (5 à 6 bar), de l'ozone dans l'eau du réacteur véhiculé dans la canalisation 21. Le tuyau de distribution des modules de filtration permet la détente de l'eau chargée en ozone au droit de la membrane. De tels moyens permettent d'assurer un bon écoulement tangentiel de l'eau à filtrer et permettent également :
- de maximiser la concentration d'ozone au contact de la membrane (ou inversement pour un résiduel d'ozone requis dans le perméat, de minimiser la consommation d'ozone) ;
- d'augmenter l'efficacité de la flottation.

On notera également que le mélange monophasique eau + Ozone formé pourra être aussi utilisé pour le rétrolavage.

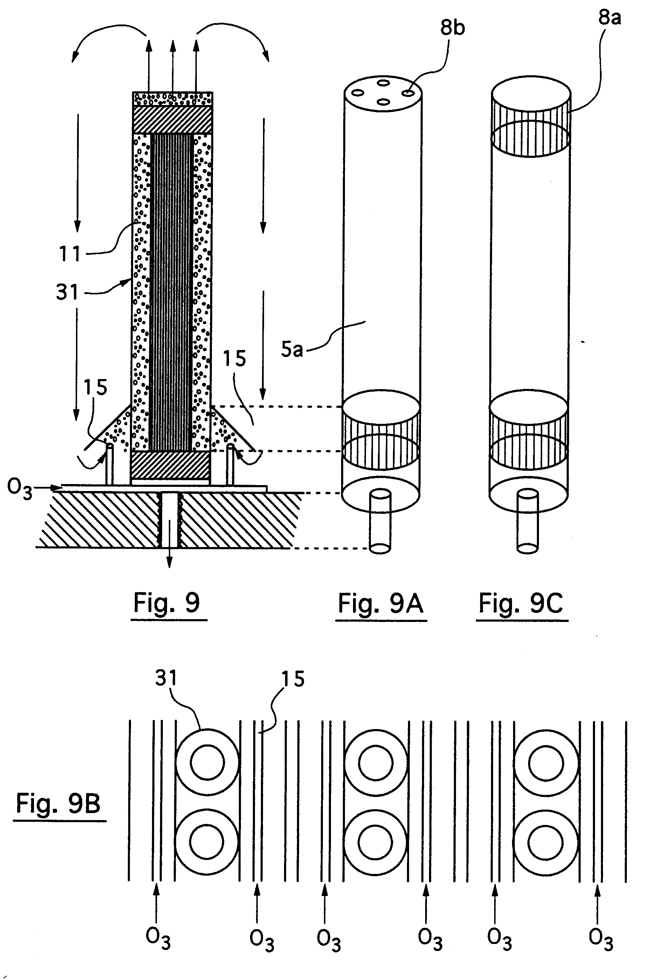

Les figures 9 (vue en coupe), 9a (vue de face) et 9b (vue de haut) représentent un autre mode de distribution de l'ozone au niveau des modules de filtration 31, dans lequel le réseau de distribution 15 n'est pas prévu au-dessus des modules de filtration mais dans la partie inférieure de la chambre de traitement et est constitué par des canalisations disposées essentiellement perpendiculairement à l'axe longitudinal des modules et distribuant l'ozone sous forme de bulles 11 à proximité de ceux-ci. Le perméat est, comme dans le mode de réalisation représenté à la figure 1, récupéré en pied de module et évacué vers la zone de récupération du perméat 10. On notera que les vues de coupe et de face ne montrent qu'un module de filtration, alors que la vue de haut en montre six.

Dans la variante de réalisation représentée à la figure 9c, la zone ajourée 8a des modules de filtration remplace les orifices 8b.

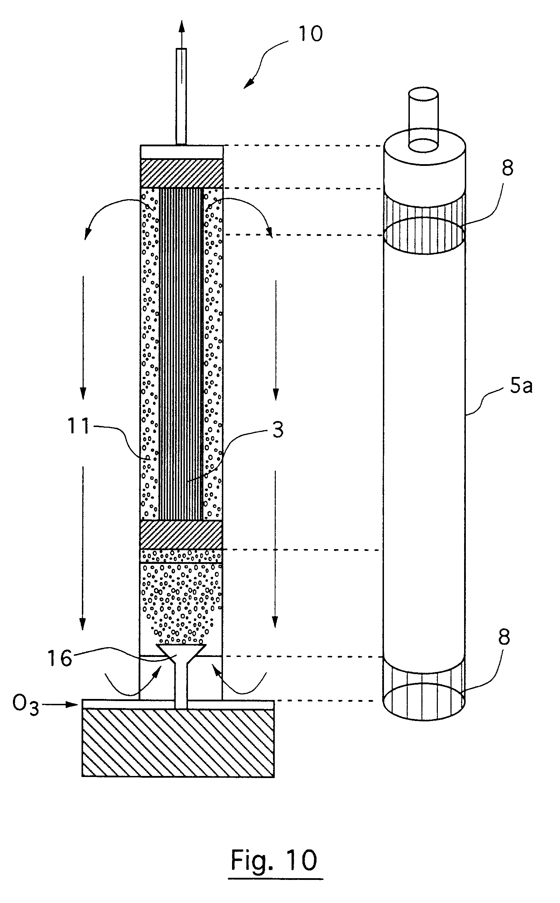

La figure 10 représente un autre mode de réalisation des modules de filtration 31 dans lesquels la distribution d'ozone se fait par des poreux 16 classiques en pied de module, le perméat étant récupéré au niveau de l'extrémité supérieure de ce module, la chambre de récupération du perméat 10 devant bien sûr alors être prévue au-dessus de la chambre de traitement 2 et non en-dessous.

Une telle conception présente l'avantage d'inclure l'utilisation de poreux classiques pour réaliser le circuit de distribution d'ozone et ainsi d'éliminer un tel circuit à la surface des modules et donc de simplifier considérablement la réalisation.

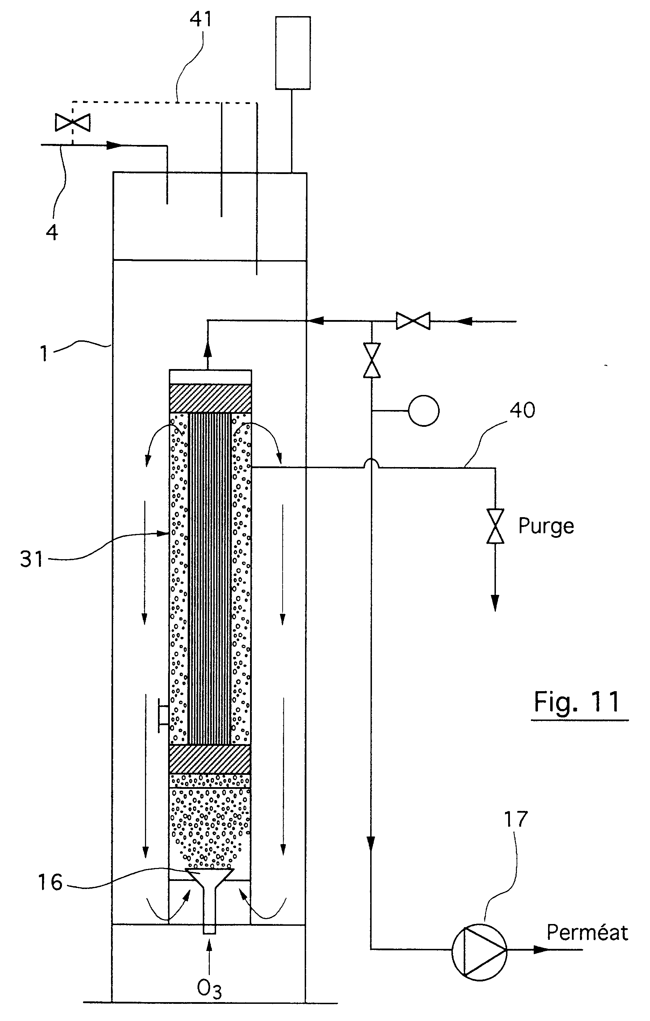

Selon la figure 11, une installation conforme à la présente invention incluant un module de filtration 31 tel que représenté à la figure 10 a été testée.

Le module en question est équipé d'une membrane organique PVDF en fibres creuses de 0,25 micromètres de diamètre de pores, la filtration se faisant de l'extérieur vers l'intérieur des fibres. Le module testé présente les caractéristiques suivantes :
Nombre de fibres par modules : 800
Diamètre interne des fibres : 1,1 mm
Diamètre externe des fibres : 2,0 mm
Surface filtrante extérieure: 5 m²
Perméabilité initiale avec eau du réseau : 1050 l/h.m².b

Le module en question a été immergé dans un réacteur 1 alimentée en eau à traiter par une canalisation 4 prévue dans sa partie supérieure et pourvue d'un système d'électrodes 41 permettant de réguler le niveau d'eau dans le réacteur 1.

L'eau brute utilisée au cours de l'essai est de l'eau de Seine. Un poreux 16 vissé au fond du réacteur 1 permet d'injecter de l'air ozoné juste en-dessous du module placé à la verticale sur un trépied. La distance entre le poreux et le module est de l'ordre de 70 cm. L'air ozoné est injecté en bas de réacteur au taux de traitement de 5 à 8 mg 0₃/l d'eau traitée avec un débit de 800 à 900 Nl/h. Le mélange liquide et gaz est évacué en haut du module par 37 trous de 5 mm de diamètre environ percés à sa périphérie.

En sortie supérieure du module, le perméat est aspiré à l'aide d'une pompe 17 à un débit de 1 m³/h et récolté dans un réservoir (non représenté). Toutes les 10 minutes, le perméat est réinjecté (grâce à une pompe non représentée) à contre-courant à travers la membrane de l'intérieur vers l'extérieur afin de décoller les particules qui auraient pu se déposer en cours de filtration sur celle-ci.

Une purge est effectuée simultanément en niveau haut du module pour évacuer l'eau provenant du décolmatage, grâce à une canalisation 40.

Le résiduel d'ozone dégazant en partie haute de la colonne est récupéré et éliminé à l'aide d'un destructeur thermique.

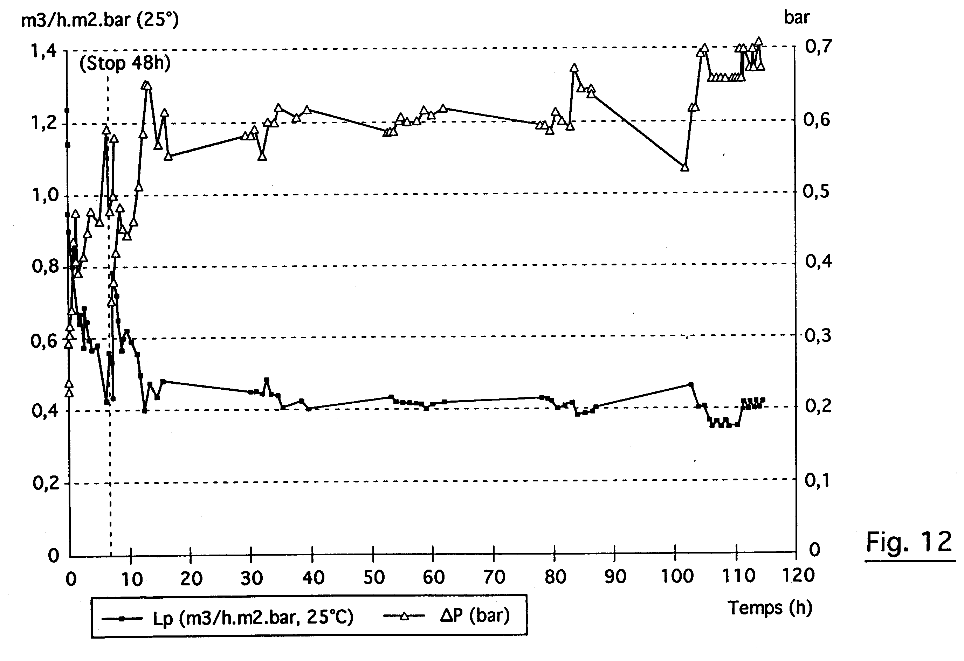

Comme on peut le voir sur la figure 12, l'essai réalisé dans ces conditions a permis de maintenir une perméabilité moyenne Lp des membranes de 400 l/h.m².b sur 115 heures environ, avec une pression transmembranaire de 0,2 à 0,7 bar.

Le résiduel d'ozone dans le perméat a été maintenu entre 0,3 et 0,4 mg/l.

Après filtration de l'eau de Seine, la membrane a été régénérée à l'ozone. Pour ce faire, la colonne a été rincée et alimentée par de l'eau du réseau. Dans des conditions opératoires identiques aux précédentes, l'eau du réseau a été filtrée en présence d'air ozoné avec un taux de traitement de l'ordre de 3,8 mg O₃/l et un débit de 270 Nl/h. Sur une période de 20 heures environ, la perméabilité a pu être rétablie efficacement de 600 l/h.m².b à 1000 l/h.m².b environ.
Les différents modes de réalisation de l'invention ici décrits n'ont pas pour objet de réduire la portée de ceux-ci. En particulier, on notera que l'installation selon l'invention pourra comprendre plus d'un réacteur. Cette installation pourra également comprendre des unités permettant d'affiner la filtration du perméat sortant du réacteur telles que des unités de filtration sur charbon actif en grains ou des unités de filtration sur membrane(s) de nanofiltration, ou encore d'osmose inverse.

## Revendications

1. Installation de traitement de l'eau, notamment en vue de sa potabilisation, caractérisée en ce qu'elle inclut :
- un réacteur (1) délimitant au moins une chambre de traitement (2) comprenant des moyens d'amenée (4) de l'eau à traiter à l'intérieur de ladite chambre (2), des moyens de purge des polluants flottés (25) et des moyens de purge des polluants décantés (28);
- une pluralité de membranes de filtration (3) prévues à l'intérieur de ladite chambre (2) et destinées à être immergées dans l'eau à traiter;
- des moyens de délimitation (5) d'une zone de filtration autour de chacune desdites membranes (3);
- des moyens d'entraînement et de circulation permettant de guider un courant d'eau à traiter dans ladite zone de filtration selon une direction privilégiée, lesdits moyens d'entraînement et de circulation incluant des moyens d'injection d'ozone (6);
- des moyens de récupération du perméat (7) à la sortie desdites membranes de filtration (3).

2. Installation selon la revendication 1 caractérisée en ce que ladite direction privilégiée est un écoulement du courant d'eau tangentiel auxdites membranes.

3. Installation selon l'une des revendications 1 ou 2 caractérisée en ce que lesdits moyens de délimitation d'une zone de filtration sont constituées par des enveloppes (5a) entourant chacune une membrane (3), lesdites enveloppes (5a) présentant des orifices (8) permettant le passage de l'eau à traiter selon ladite direction de traitement privilégiée.

4. Installation selon l'une des revendications 1 à 3 caractérisée en ce que lesdites membranes (3) et lesdits moyens de délimitation (5) d'une zone de filtration autour de chacune desdites membranes (3) présentent une position verticale à l'intérieur de ladite chambre de traitement (2).

5. Installation selon l'une quelconque des revendications 1 à 4 caractérisée en ce que ledit réacteur (1) est muni d'une paroi (9) à laquelle lesdites membranes (3) sont solidarisées, ladite paroi (9) formant une double chambre constituée par une première chambre formée par ladite chambre de traitement (2) et par une seconde chambre (10) formant une zone de récupération du perméat.

6. Installation selon les revendications 4 et 5 caractérisée en ce que ladite paroi (9) forme un double-fond dudit réacteur (1).

7. Installation selon l'une quelconque des revendications 1 à 6 caractérisée en ce que lesdits moyens d'injection d'ozone (6) sont compris dans le groupe constitué par les moyens de formation de bulles d'ozone (11) et les moyens de dissolution de l'ozone dans l'eau.

8. Installation selon l'une des revendications 1 à 7 caractérisée en ce qu'elle comprend des moyens de récupération (12) de l'ozone résiduel.

9. Installation selon les revendications 2 à 8 caractérisée en ce que lesdites membranes (3) sont chacune constituées d'un ensemble constitué par une pluralité de fibres creuses (13), utilisées en mode de filtration externe/interne.

10. Installation selon la revendication 9 caractérisée en ce que lesdites fibres creuses (13) sont bouchées à l'une de leurs extrémités, l'autre extrémité communiquant avec lesdits moyens de récupération du perméat (7).

11. Installation selon les revendications 9 ou 10 caractérisée en ce que lesdits moyens d'injection d'ozone (6) comprennent au moins un tuyau d'approvisionnement (14) traversant lesdites membranes (3) selon leur axe longitudinal, parallèlement auxdites fibres creuses (13), lesdits tuyaux (14) permettant d'amener l'ozone d'un réseau d'alimentation (15) prévu au-dessus desdites membranes (3) jusqu'au pied desdites membranes (3).

12. Installation selon l'une des revendications 9 ou 10 caractérisée en ce que lesdits moyens d'injection d'ozone (6) comprennent des poreux (16).

13. Installation selon la revendication 12 caractérisée en ce que lesdits poreux (16) sont prévus au pied desdites membranes (3).

14. Installation selon l'une des revendications 9 à 13 caractérisée en ce que lesdites enveloppes (5a) présentent des orifices inférieurs (8) par lesquels l'eau pénètre et des orifices supérieurs (8a) par lesquels l'eau et le fluide d'entraînement s'échappent, l'eau présentant un mouvement ascendant tangentiel auxdites membranes (3).

15. Installation selon l'une des revendications 1 à 14 caractérisée en ce que lesdits moyens de récupération du perméat (7) comprennent au moins une pompe aspirante (17).

16. Installation selon l'une des revendications 1 à 15 caractérisée en ce que ladite paroi (9) séparant la chambre de traitement de la chambre de récupération du perméat est munie de moyens d'injection dans lesdites membranes (3) d'un fluide de lavage des membranes.

17. Installation selon la revendication 16 caractérisée en ce qu'elle inclut une pompe de rétrolavage (18) permettant d'effectuer des lavages desdites membranes (3) en courant inverse, à l'aide du perméat.

18. Installation selon les revendications 1 à 17 caractérisée en ce qu'elle inclut un compresseur d'air (19) permettant d'injecter de l'air sous pression dans ladite chambre de récupération du perméat (7).

19. Installation selon l'une des revendications 1 à 18 caractérisée en ce qu'elle présente des moyens de recirculation (20) de l'eau présente dans ladite chambre de traitement (2).

20. Installation selon les revendications 8 et 19 caractérisée en ce que lesdits moyens de recirculation (20) comprennent au moins une boucle de recirculation (21) sur laquelle sont prévus des moyens d'alimentation en ozone (22).

21. Installation selon la revendication 20 caractérisée en ce qu'elle comprend au moins un hydroinjecteur (23) prévu sur ladite boucle de recirculation (21), ledit hydroinjecteur (23) permettant de disperser l'ozone fourni par les moyens d'alimentation en ozone (22) dans l'eau transitant par ladite boucle de recirculation (21).

22. Installation selon la revendication 20 caractérisée en ce qu'elle comprend au moins un saturateur (24)) prévu sur ladite boucle de recirculation (21), ledit saturateur (24) permettant de dissoudre sous pression élevée l'ozone fourni par les moyens d'alimentation en ozone (22) dans l'eau transitant par ladite boucle de recirculation (21).

23. Installation selon l'une des revendications 1 à 22 caractérisée en ce qu'elle comprend des unités permettant d'affiner le traitement de l'eau, lesdites unités étant prévues à la sortie dudit réacteur (1).

24. Installation selon la revendication 23 caractérisée en ce que lesdites unités sont choisies dans le groupe constitué par les barrières de sécurité incluant une ou plusieurs membranes de nanofiltration et/ou d'osmose inverse.

25. Installation selon l'une des revendications 1 à 24 caractérisée en ce qu'elle n'inclut pas d'enveloppe délimitant les zones de filtration.

26. Ensemble de filtration pour le traitement de l'eau, notamment en vue de sa potabilisation, caractérisé en ce qu'il comprend :
- une chambre de traitement (2) comprenant des moyens d'amenée (4) de l'eau à traiter à l'intérieur de ladite chambre (2), des moyens de purge des polluants flottés (25) et des moyens de purge des polluants décantés (28) ;
- une membrane de filtration (3) entourée par une enveloppe (5a) délimitant une zone de filtration, ladite membrane (3) étant installée à l'intérieur de ladite chambre de traitement (2);
- une paroi (9) à laquelle est fixée ladite membrane (9) ménageant un double-fond dans ladite chambre de traitement (2) et délimitant une zone de récupération du perméat (10) ;
- des moyens d'injection d'ozone (6) permettant de créer un courant d'eau à l'intérieur de ladite enveloppe (5a).

27. Procédé de traitement de l'eau notamment en vue de sa potabilisation mis en oeuvre dans une installation selon l'une quelconque des revendications 1 à 26, caractérisé en ce qu'il comprend les étapes consistant :
- a filtrer l'eau à travers une pluralité de membranes immergées dans l'eau à traiter;
- à ménager autour de chacune de ces membranes une zone de filtration;
- à entraîner un courant d'eau dans la zone de filtration, selon une direction privilégiée grâce à des moyens d'entraînement et de circulation incluant des moyens d'injection d'ozone ;
- à récupérer le perméat à la sortie desdites membranes.

28. Procédé selon la revendication 27 caractérisé en ce qu'il comprend une étape consistant à éliminer au moins une partie des matières polluantes dissoutes dans l'eau à traiter par addition dans ladite chambre de traitement d'au moins un réactif coagulant, adsorbant ou oxydant.

29. Utilisation d'une installation selon l'une des revendications 5 à 26 caractérisée en ce qu'elle consiste à alimenter ladite chambre de traitement (2) en surface avec l'eau à traiter et à placer la chambre de récupération du perméat (10) en dépression.

30. Utilisation d'une installation selon l'une des revendications 19 à 26 caractérisée en ce qu'elle consiste à effectuer un recyclage interne de l'eau à traiter à l'intérieur de ladite chambre de traitement (2) de façon à augmenter le temps de contact de l'eau avec l'ozone.

31. Utilisation d'une installation selon l'une des revendications 17 à 26 caractérisé en ce qu'elle comprend la mise en oeuvre de rétrolavages des membranes (3) par injection en courant inverse de perméat dans la chambre de traitement de l'installation, la périodicité des rétrolavages variant en fonction de la charge de matières en suspension de l'eau arrivant dans l'installation et de l'efficacité de la flottation.

32. Utilisation d'une installation selon l'une des revendication 16 à 26 caractérisé en ce qu'elle comprend la mise en oeuvre de rétrolavages des membranes (3) par injection en courant inverse d'un mélange monophasique aqueux d'eau et d'ozone.

33. Utilisation d'une installation selon l'une des revendications 18 à 26 caractérisée en ce qu'elle comprend la mise en oeuvre de rétrolavages des membranes (3) par injection d'air comprimé dans la chambre de récupération du perméat.

34. Utilisation d'une installation selon l'une des revendications 18 à 26 caractérisée en ce qu'elle comprend une étape consistant à injecter de l'air comprimé dans ladite chambre de récupération du perméat afin de vérifier l'intégrité des membranes (3).

35. Utilisation d'une installation selon l'une des revendications 1 à 26 caractérisée en ce qu'elle comprend une étape consistant à régénérer lesdites membranes par lavage à l'ozone.

36. Utilisation d'une installation selon l'une des revendications 1 à 26 caractérisée en ce qu'elle comprend une étape consistant à régénérer lesdites membranes par lavage à l'aide d'une solution de nettoyage renfermant au moins un produit chimique, ladite chambre de traitement servant de cuve de mélange et de recyclage de ladite solution de nettoyage.

## Claims

1. Water treatment installation, particularly for making it potable, characterised in that it includes:
a reactor (1) demarcating at least one treatment chamber (2) comprising means for conveying (4) water to be treated into said chamber (2), means for removing floating pollutants (25) and means for removing decanted pollutants (28);
a plurality of filtration membranes (3) provided inside said chamber (2) and intended to be submerged in the water to be treated;
means for demarcating (5) a filtration zone around each of the said membranes (3);
means for carrying and circulation for guiding a current of water to be treated in said filtration zone along a preferred direction, said carrying and circulation means including means for injection of ozone (6);
means for recovering permeate (7) at the outlet of the filtration membranes (3).

2. Installation according to claim 1, characterised in that the said preferred direction is a flow of the current of water tangential to said membranes.

3. Installation according to one of claims 1 or 2, characterised in that the said means for demarcating a filtration zone are constituted by sheaths (5a) each surrounding a membrane (3), said sheaths (5a) having apertures (8) permitting passage of water to be treated in said preferred direction of treatment.

4. Installation according to one of claims 1 to 3, characterised in that the said membranes (3) and said means (5) for demarcating a filtration zone around each of said membranes (3) have a vertical position within said treatment chamber (2).

5. Installation according to any one of claims 1 to 4, characterised in that said reactor (1) is provided with a wall (9) to which said membranes (3) are fixed, said wall (9) forming a double chamber constituted by a first chamber formed by said treatment chamber (2) and by a second chamber (10) forming a zone for recovery of permeate.

6. Installation according to claims 4 and 5, characterised in that said wall (9) forms a base for said reactor (1).

7. Installation according to any of claims 1 to 6, characterised in that said means (6) for injection of ozone are chosen from the group consisting of means for forming bubbles of ozone (11) and means for dissolution of ozone in water.

8. Installation according to one of claims 1 to 7, characterised in that it comprises means (12) for recovery of residual ozone.

9. Installation according to claims 2 to 8, characterised in that the said membranes (3) are each constituted by an assembly constituted by a plurality of hollow fibres (13) used in external/internal filtration mode.

10. Installation according to claim 9, characterised in that the hollow fibres (13) are plugged at one of their extremities, the other extremity communicating with said means for recovering permeate (7).

11. Installation according to claims 9 or 10, characterised in that said means for injection of ozone (6) include at least one supply tube (14) passing through said membranes (3) along their longitudinal axis, in parallel to said hollow fibres (13), said tubes (14) permitting feed of ozone from a supply network (15) provided above said membranes (3) down to a base of said membranes (3).

12. Installation according to one of claims 9 or 10, characterised in that said means (6) for injection of ozone comprise porous structures (16).

13. Installation according to claim 12, characterised in that the said porous structures (16) are provided at the base of said membranes (3).

14. Installation according to one of claims 9 to 13, characterised in that said sheaths (5a) have lower apertures (8) through which the water penetrates and upper apertures (8) through which the water and carrying fluid escape, the water having a rising movement tangential to said membranes (3).

15. Installation according to one of claims 1 to 14, characterised in that said means for recovering the permeate (7) comprise at least one suction pump (17).

16. Installation according to one of claims 1 to 15, characterised in that said wall separating the treatment chamber from the chamber for recovery of permeate is provided with means for injection into the said membranes (3) of a fluid for washing the membranes.

17. Installation according to claim 16, characterised in that it includes a pump for backwashing (18) permitting washing of said membranes (3) in counter-current, by means of the permeate.

18. Installation according to claims 1 to 17, characterised in that it includes an air compressor (19) permitting injection of air under pressure into the chamber for recovery of permeate (7).

19. Installation according to one of claims 1 to 18, characterised in that it has means for recirculation (20)of the water present in the treatment chamber (2).

20. Installation according to claims 8 and 19, characterised in that said means for recirculation (20) comprise at least one recirculation loop (21) on which are provided means for feeding ozone (22).

21. Installation according to claim 20, characterised in that it comprises a hydroinjector (23) provided on said recirculation loop (21), said hydroinjector (23) enabling dispersal of the ozone provided by the means for feeding ozone (22) into the water passing through said recirculation loop (21).

22. Installation according to claim 20, characterised in that it comprises at least one saturator (24) provided in said recirculation loop (21) said saturator (24) permitting dissolving under high pressure ozone provided by the means for feeding ozone (22) into the water passing through said recirculation loop (21).

23. Installation according to one of claims 1 to 22, characterised in that it comprises units for refining the treatment of the water, said units being provided at the outlet of said reactor (1).

24. Installation according to claim 23, characterised in that the said units are selected from the group consisting of security barriers including one or more nanofiltration membranes and/or reverse osmosis membranes.

25. Installation according to one of claims 1 to 24, characterised in that it does not include a sheath demarcating the zones of filtration.

26. Filtration assembly for the treatment of water, especially for rendering it potable, characterised in that it comprises:
a treatment chamber (2) comprising means for conveying (4) the water to be treated into the said chamber (2), means for removing floating pollutants (25) and means for removing decanted pollutants (28);
a filtration membrane (3) surrounded by a sheath (5a) demarcating a filtration zone, the said membrane (3) being disposed within said treatment chamber (2);
a wall (9) to which the said membrane (9) is fixed, defining a bottom in the said treatment chamber (2) and demarcating a zone for recovery of permeate (10);
ozone injection means (6) for creating a current of water within the said sheath (5a).

27. Process for treatment of water especially to render it potable, put into operation in an installation according to any of claims 1 to 26, characterised in that it comprises the steps of:
filtering the water through a plurality of membranes submerged in the water to be treated;
preparing a filtration zone around each of the membranes;
carrying along a current of water in the filtration zone, in a preferred direction by circulation and transport means which include ozone injection means;
recovering permeate at on outlet from said membranes.

28. Process according to claim 27, characterised in that it comprises a step consisting of eliminating at least part of the pollutant matter dissolved in the water to be treated by adding into the treatment chamber at least one coagulant reagent, adsorbent or oxidant.

29. Use of an installation according to one of claims 5 to 26, characterised in that it consists of feeding the surface of said treatment chamber (2) with water to be treated and in placing the chamber (10) for recovery of permeate below.

30. Use of an installation according to one of claims 19 to 26, characterised in that it consists of effecting internal recycling of the water to be treated into the said treatment chamber (2) so as to enhance the contact time of the water with the ozone.

31. Use of an installation according to one of claims 17 to 26, characterised in that it comprises putting into operation washing of the membranes (3) by injection in counter-current of permeate into the treatment chamber of the installation, the periodicity of the backwashing varying as a function of the charge of materials in suspension of the water arriving in the installation and the efficacy of floatation.

32. Use of an installation according to one of claims 16 to 26, characterised in that it comprises putting into operation backwashing of membranes (3) by injection in counter-current of a monophase aqueous mixture of water and ozone.

33. Use of an installation according to one of claims 18 to 26, characterised in that it comprises putting into operation the backwashing of membranes (3) by injection of compressed air into the chamber for recovery of permeate.

34. Use of an installation according to one of claims 18 to 26, characterised in that it comprises a step consisting of injecting compressed air into said permeate recovery chamber in order to verify the integrity of the membranes (3).

35. Use of an installation according to one of claims 1 to 26, characterised in that it comprises a step consisting of regenerating said membranes by washing with ozone.

36. Use of an installation according to one of claims 1 to 26, characterised in that it comprises a regeneration step of said membranes by washing with a cleansing solution containing at least one chemical, said treatment chamber being a vessel for mixing and recycling of said cleansing solution.

## Patentansprüche

1. Anlage zum Behandeln von Wasser, insbesondere mit dem Ziel der Gewinnung von Trinkwasser, dadurch gekennzeichnet, daß sie folgendes umfaßt:
- einen Reaktor (1), der mindestens eine Behandlungskammer (2) abgrenzt, welcher über Mittel (4) zum Einleiten des zu behandelnden Wassers in die Kammer (2), über Mittel zum Ablassen von aufschwimmenden Verunreinigungen (25) sowie über Mittel zum Ablassen von dekantierten Verunreinigungen (28) verfügt;
- eine Anzahl von Filtermembranen (3), die im Inneren der Kammer (2) angebracht und die zum Eintauchen in das zu behandelnde Wasser vorgesehen sind;
- Mittel (5) zum Abgrenzen eines Filterungsbereiches in der Umgebung einer jeden Membrane (3);
- Mittel zum Mitreißen und zum Zirkulieren, mit denen ein Strom von zu behandelndem Wasser in den Filterbereich in eine bevorzugte Richtung geleitet wird, wobei die Mittel zum Mitreißen und zum Zirkulieren über Mittel zum Einspritzen von Ozon (6) verfügen;
- Mittel zur Wiedergewinnung des Permeats (7) am Ausgang der Filtermembranen (3).

2. Anlage gemäß Anspruch 1,
dadurch gekennzeichnet, daß es sich bei der bevorzugten Richtung um einen Ablauf des Wasserstromes in tangentialer Richtung zu den Membranen handelt.

3. Anlage gemäß einem der Ansprüche 1 oder 2,
dadurch gekennzeichnet, daß die Mittel zum Abgrenzen eines Filterungsbereiches aus Hüllen (5a) bestehen, welche jede Membrane (3) umgeben, wobei die Hüllen (5a) Öffnungen (8) aufweisen, durch die das zu behandelnde Wasser in der bevorzugten Behandlungsrichtung fließen kann.

4. Anlage gemäß einem der Ansprüche 1 bis 3,
dadurch gekennzeichnet, daß die Membranen (3) und die Abgrenzungsmittel (5) eines Filterungsbereiches in der Umgebung einer jeden Membrane (3) in vertikaler Position im Inneren der Behandlungskammer (2) angebracht sind.

5. Anlage gemäß einem der Ansprüche 1 bis 4,
dadurch gekennzeichnet, daß der Reaktor (1) über eine Wand (9) verfügt, die mit den Membranen (3) ein Teil bildet und wobei die Wand (9) eine doppelte Kammer bildet, bestehend aus einer ersten Kammer, die von der ersten Behandlungskammer (2) gebildet wird und aus einer zweiten Kammer (10), die einen Bereich für die Wiedergewinnung des Permeats bildet.

6. Anlage gemäß der Ansprüche 4 und 5,
dadurch gekennzeichnet, daß die Wand (9) einen doppelten Boden für den Reaktor (1) bildet.

7. Anlage gemäß einem der Ansprüche 1 bis 6,
dadurch gekennzeichnet, daß die Mittel zum Einspritzen von Ozon (6) der Gruppe angehören, die von den Mitteln zum Erzeugen von Ozonbläschen (11) und der Mittel zum Lösen des Ozons im Wasser gebildet wird.

8. Anlage gemäß einem der Ansprüche 1 bis 7,
dadurch gekennzeichnet, daß sie über Mittel zur Rückgewinnung (12) des übriggebliebenen Ozons verfügt.

9. Anlage gemäß der Ansprüche 2 bis 8,
dadurch gekennzeichnet, daß die Membranen (3) jeweils aus einer Gruppe bestehen, die jeweils von einer Menge hohler Fasern (13) gebildet und im inneren/äußeren Filtermodus verwendet werden.

10. Anlage gemäß Anspruch 9,
dadurch gekennzeichnet, daß die hohen Fasern (13) an einem Ende verschlossen sind, wobei das andere Ende mit den anderen Mitteln zur Wiedergewinnung des Permeats (7) in Verbindung steht.

11. Anlage gemäß einem der Ansprüche 9 oder 10,
dadurch gekennzeichnet, daß die Mittel zum Einspritzen von Ozon (6) mindestens eine Zufuhrleitung (14) umfassen, welche die Membranen (3) entlang ihrer Längsachsen durchquert, und zwar parallel zu den hohlen Fasern (13), wobei die Leitungen (14) die Zufuhr des Ozons aus einem oberhalb der Membranen (3) angebrachten Zufuhrsystem (15) an den Fuß der Membranen (3) ermöglichen.

12. Anlage gemäß einem der Ansprüche 9 oder 10,
dadurch gekennzeichnet, daß die Mittel zum Einspritzen von Ozon (6) über poröse Trichter (16) verfügen.

13. Anlage gemäß Anspruch 12,
dadurch gekennzeichnet, daß der poröse Trichter (16) am Fuße der Membranen (3) angebracht ist.

14. Anlage gemäß einem der Ansprüche 9 bis 13,
dadurch gekennzeichnet, daß die Hüllen (5a) Öffnungen am unteren Teil (8) aufweisen, durch die das Wasser eintritt sowie Öffnungen am oberen Teil (8a), durch die das Wasser und die mitreißende Flüssigkeit ablaufen, wobei das Wasser in tangentialer Richtung zu den Membranen (3) aufsteigt.

15. Anlage gemäß einem der Ansprüche 1 bis 14,
dadurch gekennzeichnet, daß die Mittel zur Wiedergewinnung des Permeats (7) mindestens eine Saugpumpe (17) umfassen.

16. Anlage gemäß einem der Ansprüche 1 bis 15,
dadurch gekennzeichnet, daß die Wand (9), welche die Behandlungskammer von der Kammer zur Wiedergewinnung des Permeats trennt, über Mittel verfügt, um eine Waschflüssigkeit in die Membranen (3) einzupritzen.

17. Anlage gemäß Anspruch 16,
dadurch gekennzeichnet, daß sie eine Pumpe zum nachträglichen Waschen (18) umfaßt, mit der die Membranen (3) mit Hilfe des Permeats in umgekehrter Strömungsrichtung gewaschen werden können.

18. Anlage gemäß der Ansprüche 1 bis 17,
dadurch gekennzeichnet, daß sie einen Luftkompressor (19) umfaßt, mit dem Druckluft in die Kammer zur Wiedergewinnung des Permeats (7) eingeleitet werden kann.

19. Anlage gemäß einem der Ansprüche 1 bis 18,
dadurch gekennzeichnet, daß sie über Rezirkulierungsmittel (20) für das Wasser verfügt, das sich in der Behandlungskammer (2) befindet.

20. Anlage gemäß der Ansprüche 8 und 19,
dadurch gekennzeichnet, daß die Rezirkulierungsmittel (20) mindestens eine Rezirkulierungsschleife (21) umfassen, bei der Mittel zur Ozonzufuhr (22) vorgesehen sind.

21. Anlage gemäß Anspruch 20,
dadurch gekennzeichnet, daß sie mindestens eine Hydro-Einspritzvorrichtung (23) umfaßt, die an der Rezirkulierungsschleife (21) angebracht ist, wobei diese Hydro-Einspritzvorrichtung (23) die Verteilung des von den Ozonzufuhrmitteln (22) kommenden Ozons im Wasser ermöglicht, welches durch die Rezirkulierungsschleife (21) fließt.

22. Anlage gemäß Anspruch 20,
dadurch gekennzeichnet, daß sie mindestens über eine Sättigungsvorrichtung (24) an der Rezirkulierungsschleife (21) verfügt, wobei die Sättigungsvorrichtung (24) es ermöglicht, das von den Ozonzufuhrmitteln (22) eingegebene Ozon unter hohem Druck in dem Wasser zu lösen, welches durch die Rezirkulierungsschleife (21) fließt.

23. Anlage gemäß einem der Ansprüche 1 bis 22,
dadurch gekennzeichnet, daß sie über Einheiten verfügt, mit denen die Behandlung des Wassers verfeinert werden kann, wobei diese Einheiten am Ausgang des Reaktors (1) angebracht sind.

24. Anlage gemäß Anspruch 23,
dadurch gekennzeichnet, daß diese Einheiten aus der Gruppe ausgewählt sind, die aus den Sicherheitsschranken gebildet werden, welche eine oder mehrere Nanofilterungs- und/oder umgekehrte Osmosemembranen umfassen.

25. Anlage nach einem der Ansprüche 1 bis 24,
dadurch gekennzeichnet, daß sie keine Hülle enthält, welche die Filterungszonen begrenzt.

26. Filterungsgruppe zur Wasserbehandlung, insbesondere mit dem Ziel der Gewinnung von Trinkwasser, dadurch gekennzeichnet, daß sie folgendes umfaßt:
- eine Behandlungskammer (2), welche Mittel (4) zum Einleiten des zu behandelnden Wassers in das Innere dieser Kammer (2) umfaßt, ferner Mittel zum Abführen der aufschwimmenden Verunreinigungen (25) sowie Mittel zum Abführen dekantierter Verunreinigungen (28);
- eine Filterungsmembrane (3), die von einer Hülle (5a) umgeben ist, welche einen Filterungsbereich abgrenzt, wobei die Membrane (3) im Inneren der Behandlungskammer (2) angebracht ist;
- eine Wand (9) an der die Membrane (9) befestigt ist, welche einen doppelten Boden der Behandlungskammer (2) herstellt und einen Bereich zur Wiedergewinnung des Permeats (10) abgrenzt;
- Mittel zum Einspritzen von Ozon (6), mit der eine Wasserströmung im Inneren der Hülle (5a) erzeugt wird.

27. Verfahren zum Behandeln von Wasser, insbesondere mit dem Ziel der Gewinnung von Trinkwasser, welches in einer Anlage gemäß einem der Ansprüche 1 bis 26 angewandt wird,
dadurch gekennzeichnet, daß es die folgenden Schritte umfaßt:
- Filtern des Wassers durch eine Mehrzahl von Membranen, die im zu behandelnden Wasser eingetaucht sind:
- Anbringen eines Filterungsbereiches um jede Membran;
- Mitziehen einer Wasserströmung in den Filterungsbereich in einer bevorzugten Richtung durch Mittel zum Mitziehen und zur Zirkulation, die auch über Mittel zum Einspritzen von Ozon verfügen;
- Wiedergewinnung des Permeats am Ausgang dieser Membranen.

28. Verfahren gemäß Anspruch 27,
dadurch gekennzeichnet, daß es einen Schritt umfaßt, der in der Eliminierung von mindestens einem Teil der im zu behandelnden Wasser gelösten Verunreinigungen besteht, durch Zugabe von mindestens einem adsorbierenden oder oxydierenden gerinnungsfördernden Reaktivs in die Behandlungskammer.

29. Anwendung einer Anlage gemäß einem der Ansprüche 5 bis 26,
dadurch gekennzeichnet, daß sie darin besteht, das zu behandelnde Wasser an die Oberfläche der Behandlungskammer (2) zu leiten, wobei die Kammer zur Wiedergewinnung des Permeats (10) unter verringertem Druck steht.

30. Anwendung einer Anlage gemäß einem der Ansprüche 19 bis 26,
dadurch gekennzeichnet, daß sie in der internen Rezyklierung des zu behandelnden Wassers im Inneren der Behandlungskammer (2) besteht, um die Zeit, während der das Wasser mit dem Ozon in Kontakt ist, zu verlängern.

31. Anwendung einer Anlage gemäß einem der Ansprüche 17 bis 26,
dadurch gekennzeichnet, daß sie die Anwendung nachträglicher Waschvorgänge der Membranen (3) umfaßt, durch Gegenstromeinspritzung von Permeat in die Behandlungskammer der Anlage, wobei die Periodizität der nachträglichen Waschvorgänge als Funktion der Schwebstoffbelastung des Wassers, das in der Anlage ankommt, sowie der Leistungsfähigkeit des Aufschwimmens variiert.

32. Anwendung einer Anlage gemäß einem der Ansprüche 16 bis 26,
dadurch gekennzeichnet, daß sie die Anwendung nachträglicher Waschvorgänge der Membranen (3) umfaßt, durch Gegenstromeinspritzung eines monophasischen wäßrigen Wasser-Ozon-Gemisches.

33. Anwendung einer Anlage gemäß einem der Ansprüche 18 bis 26,
dadurch gekennzeichnet, daß sie die Anwendung nachträglicher Waschvorgänge der Membranen (3) umfaßt, durch Einleiten von Preßluft in die Kammer zur Wiedergewinnung des Permeats.

34. Anwendung einer Anlage gemäß einem der Ansprüche 18 bis 26,
dadurch gekennzeichnet, daß sie einen Schritt umfaßt, der im Einleiten von Preßluft in die Kammer zur Wiedergewinnung des Permeats besteht, um die Unversehrtheit der Membranen (3) zu prüfen.

35. Anwendung einer Anlage gemäß einem der Ansprüche 1 bis 26,
dadurch gekennzeichnet, daß sie einen Schritt umfaßt, der im Regenerieren der Waschmembranen durch Waschen mit Ozon besteht.

36. Anwendung einer Anlage gemäß einem der Ansprüche 1 bis 26,
gekennzeichnet durch einen Schritt, der im Regenerieren der Waschmembranen durch Waschen mit einer Waschlösung besteht, die mindestens eine Chemikalie enthält, wobei die Behandlungskammer die Rolle eines Behälters zum Mischen und zum Rezyklieren der Waschlösung spielt.
